# EUROPÄISCHE PATENTSCHRIFT

(11) **EP 2 181 006 B1**
(45) Veröffentlichungstag und Bekanntmachung des Hinweises auf die Patenterteilung: **22.02.2012**
(21) Anmeldenummer: 08801230.7
(22) Anmeldetag: 26.08.2008
(51) Int. Cl.: B60J 7/00

(54) **ROLLOANORDNUNG FÜR EIN KRAFTFAHRZEUG**
BLIND ARRANGEMENT FOR A MOTOR VEHICLE
AGENCEMENT DE STORE POUR UN VEHICULE AUTOMOBILE

(30) Priorität: 31.08.2007 DE 102007041298
(43) Veröffentlichungstag der Anmeldung: 05.05.2010
(73) Patentinhaber: Webasto AG, 82131 Stockdorf (DE)
(72) Erfinder: ZENDATH, Thomas, 72555 Metzingen (DE)
(74) Vertreter: advotec.
(86) Internationale Anmeldenummer: PCT/DE2008/001410
(87) Internationale Veröffentlichungsnummer: WO 2009/026904

(56) Entgegenhaltungen:
- DE-A1-102005 024 657
- DE-B3-102005 048 207
- DE-U1-202005 006 415
- DE-U1-202007 005 531

## Beschreibung

Die Erfindung betrifft eine Rolloanordnung für ein Kraftfahrzeug nach dem Oberbegriff des Patentanspruchs 1.

Eine derartige Rolloanordnung ist beispielsweise aus der DE 10 2005 024 657 A1 bekannt und dient zur Abschattung einer insbesondere in einem Dachbereich eines Fahrzeugs angeordneten, transparenten Karosseriefläche. Die bekannte Rolloanordnung umfasst eine Rollobahn, die an einem Wickelrohr aufwickelbar bzw. von dieser abwickelbar und entlang ihren seitlichen, sich in Ausziehrichtung erstreckenden Rändern in Führungsschienen geführt ist. Zur Führung in den Führungsschienen weist die Rollobahn in ihren Randbereichen jeweils eine aus einem Metallband gebildete Randversteifung auf, die eine Konstantkraftfeder darstellt und die in eine Führungsbahn der jeweiligen Führungsschiene eingreift. Die Konstantkraftfedern wickeln sich in einem heckseitig außerhalb der Führungsbahnen der Führungsschienen angeordneten Bereich selbsttätig spiralförmig auf. Hierbei wird eine in Aufwickelrichtung wirkende Zugkraft auf einen Zugspriegel ausgeübt, der sich am frontseitigen Ende der Rollobahn in Fahrzeugquerrichtung erstreckt und ebenfalls in den seitlichen Führungsschienen geführt ist.

Eine Rolloanordnung der einleitend genannten Art ist auch aus der DE 20 2005 006 415 U1 bekannt. Diese Rolloanordnung umfasst ebenfalls eine Rollobahn, welche an ihren außen liegenden Rändern jeweils mit einer Spiralfeder versehen ist. Die Spiralfedern sind jeweils in einer Führungsschiene geführt, die entlang eines jeweiligen Längsrands einer Dachöffnung des betreffenden Kraftfahrzeugs angeordnet ist. Heckseitig von den Führungsschienen ist jeweils eine Aufwickelhilfe für die Rollobahn angeordnet. Die Aufwickelhilfe ist als im Wickelsinn gekrümmte Fläche ausgebildet, an der die jeweilige Spiralfeder beim Auf- und Abwickeln der Rollobahn geführt ist.

Bei den vorstehend beschriebenen Rolloanordnungen gemäß dem Stand der Technik besteht der Nachteil, dass die Rollobahn im Bereich der Wicklung bzw. des Wickelkörpers keine Spannung in Fahrzeugquerrichtung erfährt. Dadurch besteht in diesem Bereich das Risiko einer Bildung von Falten, die sich auf dem Stoff abzeichnen können, was wiederum in Schließstellung des Rollos vom Fahrzeuginnenraum aus sichtbar sein kann.

Bei einer Vormontage der Rolloanordnung in einem Kraftfahrzeug oder auch in einem Schiebedachsystem besteht des Weiteren das Problem, dass die Rollobahn im Bereich ihrer Wicklung nach innen, d. h. in Richtung der Mittelebene der Rolloanordnung gerafft werden kann. Dies kann wiederum zu einer Beschädigung der Rolloanordnung führen. Insbesondere können dadurch da die Konstantkraftfeder und auch die Rollobahn beschädigt werden.

Ein definiertes Wickelverhalten wird bei diesen Rolloanordnungen durch einen Wickelkern, wie eine drehbar gelagerte Wickelwelle, gewährleistet. Derartige Bauteile sind aber mit zusätzlichen Kosten verbunden und können des Weiteren auch eine ungewünschte Geräuschentwicklung bei Betätigung der Rolloanordnung verursachen. Des Weiteren bedingen bewegte Bauteile auch häufig technische Probleme.

Der Erfindung liegt die Aufgabe zugrunde, eine Rolloanordnung der einleitend genannten Gattung mit optimierten Rollospanneigenschaften zu schaffen.

Diese Aufgabe ist erfindungsgemäß durch die Rolloanordnung mit den Merkmalen des Patentanspruchs 1 gelöst.

Es wird mithin eine Rolloanordnung für ein Kraftfahrzeug, insbesondere für ein Fahrzeugdach bereitgestellt, das mindestens eine Rollobahn umfasst, die entlang ihrer seitlichen Randbereiche jeweils ein als Kraftfeder ausgebildetes Führungsband umfasst, das sich entlang der Ausziehrichtung der Rollobahn erstreckt, das in einer sich in Ausziehrichtung erstreckenden, die Rollobahn quer zur Ausziehrichtung spannenden Führungsbahn einer Führungsschiene geführt ist und das die Rollobahn nach austreten aus der Führungsbahn zu einem Wickelkörper formt. Der Wickelkörper hat eine sich quer zur Ausziehrichtung der Rollobahn erstreckende Wickelachse, die in Höhe der beidseits angeordneten Führungsbahnen angeordnet ist. Damit ist die Rollobahn über ihre gesamten von dem Wickelkörper abgewickelten Bereich quer zur Ausziehrichtung gespannt bzw. straff gehalten. Das Risiko einer Bildung von Falten ist damit minimiert, und zwar auch in Höhe des Wickelkörpers. Durch die Seitenführung zur Spannung der Rollobahn quer zur Ausziehrichtung bis in Höhe des Wickelbereichs ergeben sich auch dort die Vorteile der Seitenführung. Es liegt mithin eine gute Stoffspannung und damit auch ein ansprechendes Erscheinungsbild der Rollobahn über die gesamte Ausziehlänge vor. Ein Stoffflattern kann durch die erfindungsgemäße Ausgestaltung gering gehalten oder auch ausgeschlossen werden. Das Risiko einer Faltenbildung ist minimiert. Damit kann auch ausgeschlossen werden, dass sich Falten im Sichtbereich der Rollobahn abzeichnen. Durch die definierte Spannung in Fahrzeugquerrichtung ist im Wesentlichen auch ausgeschlossen, dass während der Fahrt Geräusche auftreten, die durch eine Flattern der Rollobahn oder dergleichen bedingt sind.

Bei der Rolloanordnung nach der Erfindung ist also die Wickelachse bezüglich der Führungsschienen so angeordnet, dass sie diese bei einer Projektion in Fahrzeughochrichtung schneidet. Die Begrifflichkeit "in Höhe" ist also in ihrem weitesten Sinne zu verstehen und nicht auf die relative Höhenlage der betreffenden Bauteile bezogen auf die Fahrzeughochrichtung sondern auf die Relativlage der betreffenden Bauteile in Fahrzeuglängsrichtung gerichtet.

Durch die Seitenführung ist auch gewährleistet, dass die Ränder bzw. die mit den Konstantkraftfedern versehenen Randbereiche der Rollobahn im Wickelbereich während des Transports, der Montage oder auch im Betrieb in Richtung Mittelebene der Rolloanordnung rutschen und ein Raffen der Rollobahn bewirken. Drehbare Bauteile zur Lagerung des Wickelkörpers sind nicht zwingend erforderlich.

Ferner kann durch die erfindungsgemäße Ausbildung einer Rolloanordnung der zur Verfügung stehende Bauraum im Bereich eines Fahrzeugdachs auch besser ausgenutzt werden, da der Wickelbereich unabhängig von der Höhe der Führung im Sichtbereich des Rollos positioniert werden kann. Es kann ein stark gekrümmter Verlauf der Kraftfeder zwischen dem Sichtbereich und dem Wickelbereich realisiert werden.

Des Weiteren ist es möglich, die Rolloanordnung als fertig montiertes Modul bereit zu stellen, da auch der Wickelbereich, d. h. der Bereich, in dem die Konstantkraftfedern aufgewickelt werden, vormontiert werden kann.

Bei der Rolloanordnung nach der Erfindung weisen die Führungsbahnen jeweils eine in Ausziehrichtung im Wesentlichen gekrümmte Führungsfläche für die Rollobahn auf, die sich an den Wickelkörper anschließt, wobei die Krümmung der Führungsfläche gleichsinnig zu der Wicklung des Wickelkörpers ist. Solche Führungsflächen begünstigen das Wickelverhalten der Rollobahn bzw. der insbesondere als Spiralfedern ausgebildeten Kraftfedern, da die Kraftfeder durch die Führungsbahn im Wickelsinn gebogen wird.

Um die Anordnung des Wickelkörpers für einen bestimmten Fahrzeugtyp bauraumoptimiert realisieren zu können, ohne die Ausbildung der Rolloanordnung grundsätzlich zu ändern, sind die Führungsbahnen jeweils in Höhe der Wickelachse in einem stirnseitigen Aufsatz der Führungsschiene ausgebildet, der an einer Stirnseite eines im Wesentlichen gerade ausgebildeten Führungsschienenabschnitts angeordnet ist. Der Aufsatz ist insbesondere ein Kunststoffspritzgießteil, dessen Geometrie sehr variabel entsprechend den jeweils vorliegenden Anforderungen ausgebildet sein kann. Der im Wesentlichen gerade ausgebildete Abschnitt der Führungsschiene ist insbesondere ein Aluminiumstrangpressprofil. Denkbar ist es natürlich auch, dass der im Wesentlichen gerade ausgebildete Führungsschienenabschnitt und ein dem Aufsatz entsprechender Endabschnitt einstückig, dann beispielsweise als Kunststoffspritzgießteil, gefertigt sind.

Der vorliegend im Zusammenhang mit dem Führungsschienenabschnitt verwendete Begriff "im Wesentlichen gerade ausgebildet" umfasst auch Führungsschienen, die in Ausziehrichtung der Rollobahn eine leichte, beispielsweise dem jeweiligen Fahrzeugdachverlauf folgende Krümmung aufweisen, d. h. bei denen ein großer Krümmungsradius vorliegt.

Insbesondere können die Führungsbahnen zur Bauraumoptimierung jeweils in Höhe der Wickelachse aus einer bezogen auf die Wickelachse inneren Schale und einer bezogen auf die Wickelachse äußere Schale gebildet sein, welche Schalen jeweils in Fahrzeughochrichtung im Wesentlichen S-förmig gekrümmt sind und mit Stegen korrespondieren bzw. an Stege angrenzen, die die jeweilige Führungsbahn im Bereich des im Wesentlichen geraden Führungsschienenabschnitts beidseits begrenzen.

Die äußere Schale, die vorzugsweise von der Rollobahn umgriffen ist, grenzt bei einer bevorzugten Ausführungsform an den korrespondierenden Steg des im Wesentlichen geraden Führungsschienenabschnitts. Damit ist gewährleistet, dass die Führungsbahn unterbrechungsfrei ausgebildet ist, was wiederum die Spannung der Rollobahn in Fahrzeugquerrichtung und damit ein anmutendes Erscheinungsbild gewährleistet.

Die Dicke der äußeren Schale des Aufsatzes, welche von der Rollobahn umgriffen ist, kann in der dem Führungsschienenabschnitt abgewandten Richtung, d.h. in Richtung Fahrzeugheck abnehmen. Die äußere Schale verjüngt sich dann also in Richtung ihrer freien Stirnseite bezogen auf die Fahrzeughochrichtung. Um die Rollobahn in diesem Falle trotzdem im Bereich ihres Wickelkörpers quer zur Ausziehrichtung bzw. in Fahrzeugquerrichtung gespannt zu halten, hat der bezogen auf die Fahrzeuglängsmittelebene außen angeordnete Rand der äußeren Schale dann zwischen dem sich an den Führungsschienenabschnitt anschließenden Bereich und der heckseitigen Stirnseite vorzugsweise einen Verlauf weg von der Fahrzeuglängsmittelebene. Insbesondere kann der bezogen auf die Fahrzeuglängsmittelebene außen angeordnete Rand der äußeren Schale einen im Wesentlichen S-förmigen Verlauf bezogen auf die Fahrzeugquerrichtung haben. Dies kann dadurch realisiert sein, dass die Breite der äußeren Schale zunimmt. Der außen liegende Rand der inneren Schale kann parallel zum äußeren Rand der äußeren Schale verlaufen.

Zur exakten Führung der Wicklung der sich spiralförmig aufwickelnden Kraftfedern können die Aufsätze jeweils eine seitliche Anlagefläche für den jeweils korrespondierenden Randbereichs des Wickelkörpers haben.

Um eine Wölbung des Wickelkörpers vorgeben zu können und/oder auch ein möglichst straffes Wickelverhalten vorgeben zu können, ist es vorteilhaft, wenn die Anlagefläche eine Normale hat, die gegenüber der Fahrzeugquerrichtung in Richtung Fahrzeugbug und/oder in vertikaler Richtung angestellt ist. Ein Anstellen der Normalen in Richtung Fahrzeugbug um beispielsweise 1° bis 10° bewirkt, dass die jeweilige Konstantkraftfeder im Wesentlichen einer Konusfläche folgend aufgewickelt wird, was eine hinreichende Spannung der Rollobahn im Bereich des Wickelkörpers gewährleistet und ein Ausbrechen der mit den Konstantkraftfedern versehenen Rollobereiche in Richtung Fahrzeuglängsmittelebene beim Wickeln des aus der Rollobahn gebildeten Wickelkörpers verhindert. Durch ein Anstellen der Normalen der Anlagefläche in vertikaler Richtung lässt sich eine Wölbung des Wickelkörpers vorgeben, die einer Wölbung bzw. Bombierung des betreffenden Fahrzeugdachs entsprechen kann.

Um zu verhindern, dass die Kraftfeder beim Wickeln des Wickelkörpers in Richtung Fahrzeuglängsmittelebene ausweicht bzw. ausbricht, kann an der inneren Schale der Führungsbahn in Höhe der Wickelachse bzw. des Wickelkörpers in einem der Fahrzeuglängsmittelebene zugewandten Bereich eine Stützfläche für den die Kraftfeder aufweisenden Bereich des Wickelkörpers vorgesehen sein. Die Stützfläche hält die außen liegenden Wicklungen der Kraftfeder in Spur, was wiederum das Wickelverhalten der Rolloanordnung begünstigt.

Die Stützfläche ist beispielsweise aus einer Schräge gebildet, die an der dem Wickelkörper zugewandten Seite der inneren Schale ausgebildet ist. Die Stützfläche kann aber alternativ auch von einem an der inneren Schale ausgebildeten vertikalen Bund bzw. Steg gebildet sein.

Um das Aufwickeln der Kraftfedern weiter zu unterstützen, kann im Bereich der Wickelachse ein Wickelelement für den Wickelkörper vorgesehen sein. Das Wickelelement ist beispielsweise ein Bolzen oder Zapfen, der mit einer Stirnplatte zur innenseitigen Führung der jeweiligen Kraftfeder versehen sein kann. Der Bolzen bzw. Zapfen kann aber auch kegelstumpfartig ausgebildet sein und sich in Richtung Fahrzeuglängsmittelebene aufweiten, so dass die jeweilige Kraftfeder mit ihren innen liegenden Wicklungen bezogen auf die Fahrzeuglängsmittelebene nach außen gehalten werden.

Die Funktion des Wickelelements kann des Weiteren dadurch optimiert sein, dass es ein drehbar gelagertes Element im Bereich der Kraftfeder umfasst. Beispielsweise ist der vorstehend genannte Bolzen bzw. Zapfen drehbar gelagert. Das drehbar gelagerte Element kann aber auch eine auf einem Bolzen oder Zapfen gelagerte Hülse sein.

Um den Aufsatz, der in Höhe der Wickelachse des Wickelkörpers der Rollobahn angeordnet ist, gegenüber dem im Wesentlichen gerade ausgebildeten Führungsschienenabschnitt genau positionieren zu können, kann er Positionierzapfen aufweisen, über die der Aufsatz in den im wesentlichen geraden Führungsschienenabschnitt aufgesteckt werden kann und die in korrespondierende Ausnehmungen oder durch Stege begrenzte Kanäle des betreffenden im Wesentlichen gerade ausgebildeten Führungsschienenabschnitts eingreifen.

Zur Fixierung am Fahrzeugaufbau kann der Aufsatz des Weiteren mindestens eine Fixierlasche aufweisen. Die Fixierlasche kann beispielsweise ein insbesondere als Langloch ausgebildetes Loch zum Befestigen des Aufsatzes an dem Fahrzeugaufbau mittels einer Schraube aufweisen.

Damit gewährleistet es, dass der Aufsatz nicht mit einem Antriebskabel eines Dachöffnungssystems kollidiert, kann an dem Aufsatz ein Führungskanal für das Antriebskabel vorgesehen sein, welcher mit einem für das Antriebskabel vorgesehenen Führungskanal an dem im Wesentlichen geraden Führungsschienenabschnitt fluchtet.

Bei einer speziellen Ausführungsform der Rolloanordnung nach der Erfindung ist über die Erstreckung des Wickelkörpers verteilt beabstandet von den Kraftfedern mindestens eine Wickelhilfe angeordnet, die ausschließlich und in direktem Kontakt mit der Rollobahn zusammenwirkt. Durch eine an die jeweiligen Anforderungen angepasste Formgebung der mindestens einen Wickelhilfe, welche insbesondere im Querschnitt etwa U- oder halbkreis- oder halb ellipsenförmig ausgebildet ist, kann die Querschnittsform des Wickelkörpers im aufgewickelten Zustand über dessen Erstreckung quer zur Wickelrichtung vorgegeben werden. Beispielsweise kann eine Abflachung des Wickelkörpers durch eine geeignete Formgebung der vorzugsweise mehreren Wickelhilfen realisiert werden, so dass eine Minimierung des erforderlichen Bauraums in Fahrzeughochrichtung im Bereich des Fahrzeuginnenraums erreicht werden kann.

Bei einer speziellen Ausführungsform der Rolloanordnung nach der Erfindung sind die Wickelhilfen über die Erstreckung des Wickelkörpers dreidimensional konturiert, insbesondere bogenförmig oder gewölbt angeordnet, so dass die Rollobahn zu einem wickelkernfreien, bogenförmigen Wickelkörper aufgewickelt werden kann.

Weitere Vorteile und vorteilhafte Ausgestaltungen des Gegenstandes der Erfindung sind der Beschreibung, der Zeichnung und den Patentansprüchen entnehmbar.

Ausführungsbeispiele einer Rolloanordnung sind in der Zeichnung schematisch vereinfacht dargestellt und werden in der nachfolgenden Beschreibung näher erläutert. Es zeigt:
- Fig. 1: eine schematische Draufsicht auf ein Fahrzeugdach;
- Fig. 2: eine Seitenansicht einer Führungsschiene einer Rolloanordnung des Fahrzeugdachs;
- Fig. 3: eine perspektivische Darstellung eines heckseitigen Aufsatzes der Führungsschiene;
- Fig. 4: eine weitere perspektivische Darstellung des Aufsatzes;
- Fig. 5: eine Draufsicht auf den Wickelbereich der Führungsschiene nach Fig. 2;
- Fig. 6: einen Schnitt durch die Führungsschiene entlang der Linie VI-VI in Fig. 5;
- Fig. 7: einen Querschnitt durch die Führungsschiene entlang der Linie VII-VII in Fig. 5;
- Fig. 8: einen Schnitt durch den Wickelbereich entlang der Linie VIII-VIII in Fig. 5;
- Fig. 9: einen Längsschnitt durch die Führungsschiene entlang der Linie IX-IX in Fig. 5;
- Fig. 10: eine alternative Ausführungsform eines Wickelbereichs mit einem zylindrischen Lagerzapfen;
- Fig. 11: eine weitere alternative Ausführungsform eines Wickelbereichs mit einem konischen Lagerzapfen;
- Fig. 12: eine weitere alternative Ausführungsform eines Wickelbereichs mit einer drehbar gelagerten Lagerhülse;
- Fig. 13: eine Ausführungsform eines Wickelbereichs ohne seitliche Anlagefläche für den Wickelkörper;
- Fig. 14: eine alternative Ausführungsform eines Wickelbereichs mit einem gekrümmt ausgebildeten Wickelkörper;
- Fig. 15: eine weitere alternative Ausführungsform eines Wickelbereichs mit einer in Richtung Fahrzeugbug angestellten Wickelachse einer Konstantkraftfeder;
- Fig. 16: einen Wickelbereich einer Rolloanordnung mit einer inneren Stützfläche für eine Konstantkraftfederwicklung;

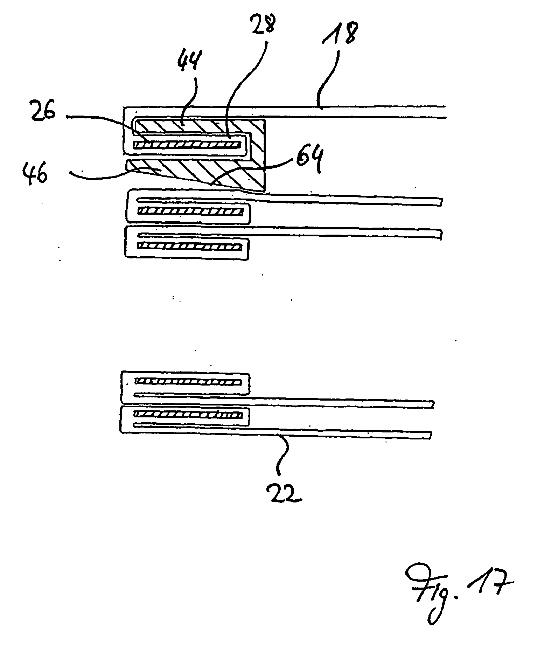

- Fig. 17: einen Wickelbereich einer Rolloanordnung mit einer als Schräge bzw. Rampe ausgebildete Stützfläche für eine Konstantkraftfederwicklung; und
- Fig. 18: eine Seitenansicht einer weiterer Ausführungsform eines hinteren Aufsatzes einer Führungsschiene.

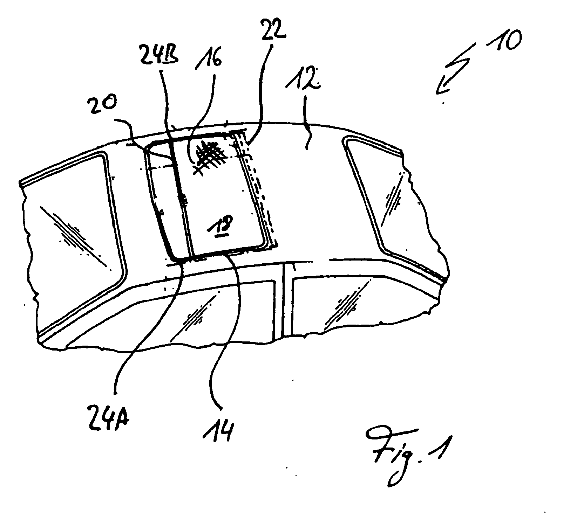

In Fig. 1 ist ein Kraftfahrzeug 10 mit einem Fahrzeugdach 12 dargestellt, das mit einem Dachausschnitt 14 versehen ist, der mittels eines hier nicht näher dargestellten transparenten Deckelelements verschließbar ist.

Zur Abschattung des Dachausschnitts 14 umfasst das Fahrzeugdach 12 eine dargestellte Rolloanordnung 16, die in nicht näher dargestellter Weise elektrisch betätigbar ist und eine Rollobahn 18 aufweist, welche an ihrem vorderen Ende von einem Zugspriegel 20 begrenzt ist und heckseitig zu einem Wickelkörper 22 aufwickelbar ist. An ihren seitlichen Rändern ist die Rollobahn 16 jeweils in einer Führungsschiene 24A bzw. 24B geführt.

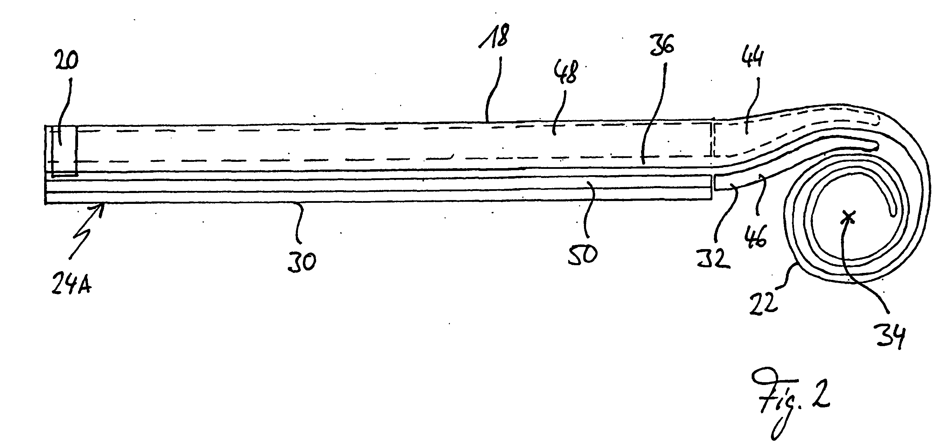

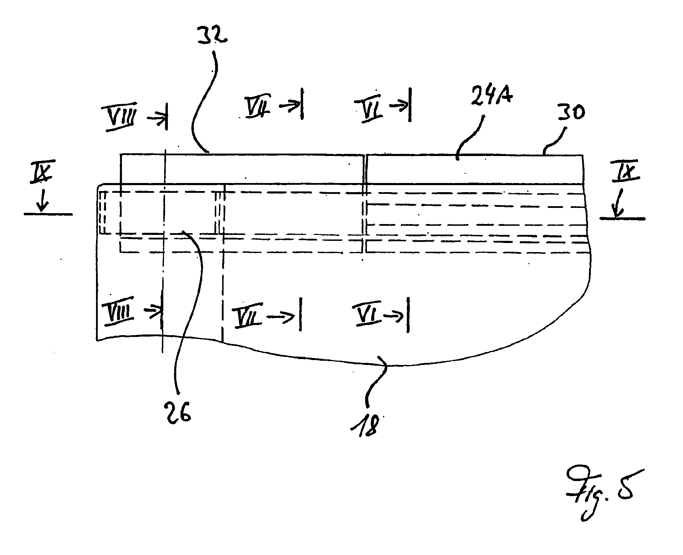

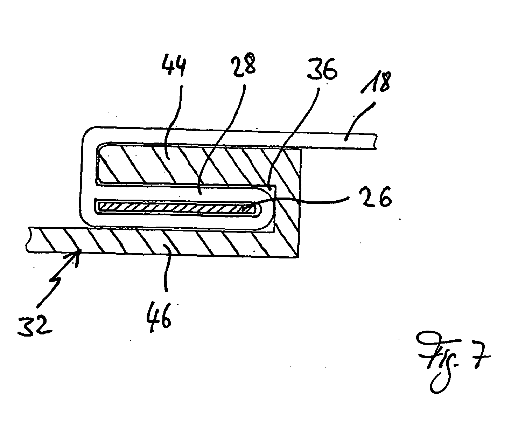

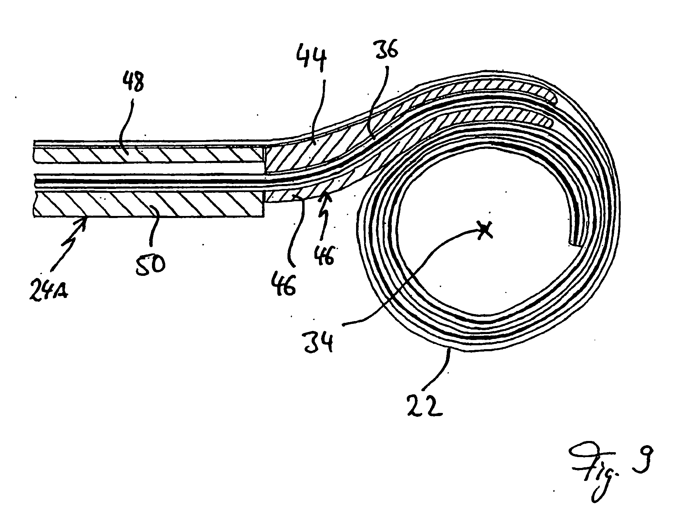

Wie den Figuren 2 bis 9 zu entnehmen ist, weist die Rollobahn 18 zur Führung in den Führungsschienen 24A und 24B in ihren seitlichen Randbereichen jeweils eine Randversteifung 26 auf, die in einer Randtasche 28 der Rollobahn 18 eingenäht ist und ein als Konstantkraftfeder darstellendes Führungsband ist. Die Randversteifung bzw. die Konstantkraftfeder 26 hat das inhärente Bestreben, sich spiralförmig aufzuwickeln, so dass außerhalb der Führungsschienen 24A und 24B liegende Bereiche der Konstantkraftfedern eine Zug- bzw. Öffnungskraft auf die Rollobahn 18 ausüben. Die Rollobahn 16 der vorliegend beschriebenen Ausführungsform hat also das Bestreben sich selbsttätig zu dem Wickelkörper 22 aufzuwickeln. Dem wird durch geeignete Gegenkräfte entgegengewirkt, die am Zugspriegel 20 und/oder in den seitlichen Führungsbereichen der Rollobahn 18 eingeleitet werden.

Die Führungsschienen 24A und 24B sind bezüglich der Fahrzeuglängsmittelebene spiegelsymmetrisch zueinander ausgebildet und werden daher nachfolgend nur unter Bezugnahme auf die in Fahrtrichtung links angeordnete Führungsschiene 24A beschrieben.

Die Führungsschiene 24A umfasst einen sich im wesentlichen entlang eines seitlichen Randes des Dachausschnitts 14 erstreckenden, geraden Führungsschienenabschnitt 30 sowie einen sich an den geraden Führungsschienenabschnitt 30 heckseitig anschließenden Aufsatz 32, der in Höhe einer Wickelachse 34 des Wickelkörpers 22 angeordnet ist.

In dem geraden Führungsschienenabschnitt 30 und dem heckseitigen Aufsatz 32 ist eine Führungsbahn 36 ausgebildet, in welcher die Konstantkraftfeder 26 geführt ist, welche an ihrem vorderen, d. h. in Richtung Fahrzeugbug weisenden Ende mit dem Zugspriegel 20 verbunden ist.

Am heckseitigen Ende der Führungsschiene 24A bzw. des Aufsatzes 32 tritt der die Konstantkraftfeder 26 aufweisende Randbereich der Rollobahn 18 aus der Führungsschiene 24A aus, so dass sich durch die Vorspannung der Konstantkraftfeder 26 beim Zurückziehen des Zugspriegels 20, d. h. beim Freigeben des Dachausschnittes 14 die Rollobahn 18 selbsttätig zu dem Wickelkörper 22 aufwickelt.

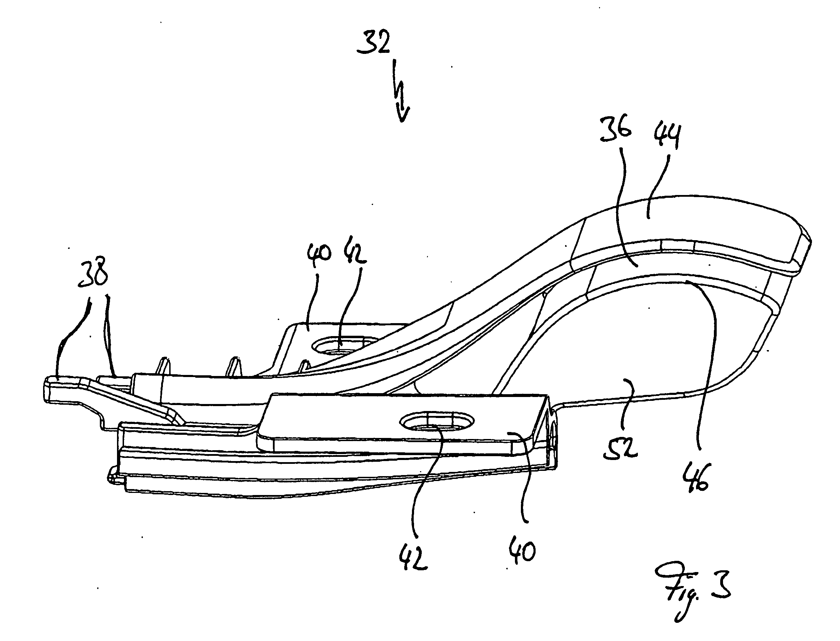

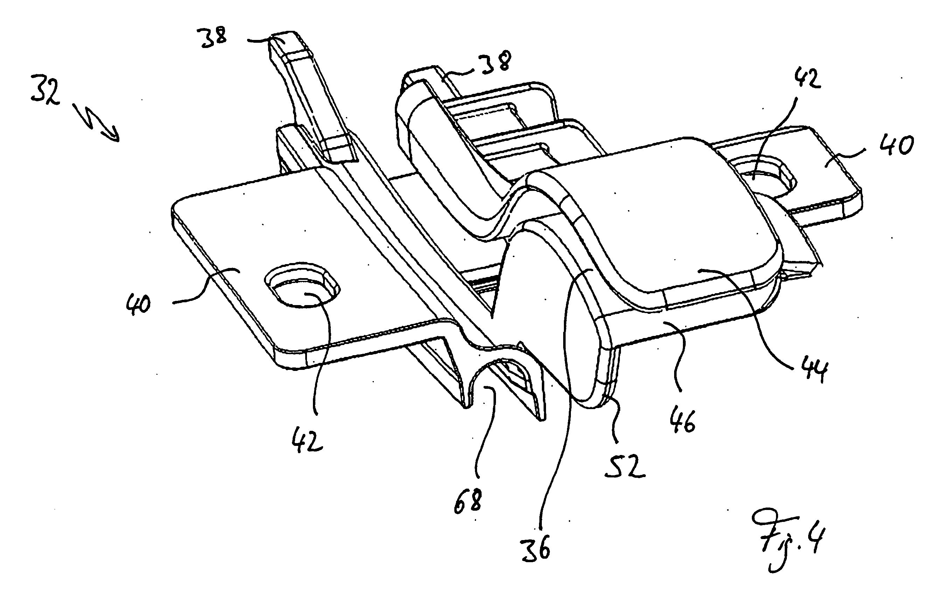

Der Aufsatz 32, der in den Figuren 3 und 4 in Alleinstellung dargestellt ist, weist an seiner dem geraden Führungsschienenabschnitt zugewandten Seite zwei Positionierzapfen 38 auf, die in korrespondierende Ausnehmungen bzw. Kanäle des geraden Führungsschienenabschnitts 30 einsteckbar sind, so dass der innerhalb des Aufsatzes 32 angeordnete Abschnitt der Führungsbahn 36 mit dem innerhalb des geraden Führungsschienenabschnitts 30 angeordneten Abschnitt der Führungsbahn 36 fluchtet.

Zur Fixierung am Dachaufbau bzw. Fahrzeugaufbau weist der Aufsatz 32 bezogen auf die Fahrzeuglängsmittelebene außen und innen jeweils eine Fixierlasche 40 auf, die mit einem Langloch 42 versehen ist, mittels dessen der Aufsatz 32 mit dem Fahrzeugaufbau verschraubt werden kann.

Die Führungsbahn 36, die sich in Fahrzeuglängsrichtung betrachtet über die Lage der Wickelachse 36 des Wickelkörpers 22 hinaus erstreckt, ist oben, d. h. bezogen auf die.Wickelachse 34 außen, von einer äußeren bzw. oberen Schale 44 und unten, d. h: bezogen auf die Wickelachse 34 innen, von einer inneren bzw. unteren Schale 46 begrenzt. Die äußere Schale 44 und die innere Schale 46 sind jeweils derartig gekrümmt, dass die Führungsbahn 36 im Bereich des Aufsatzes 32 einen in Fahrzeughochrichtung im Wesentlichen S-förmigen Verlauf hat. Die Krümmung der Führungsbahn 36 ist im Bereich von deren freien, heckseitigen Stirnseite gleichsinnig mit der Wicklung des Wickelkörpers 22 verläuft. Diese Krümmung fördert und erleichtert das Aufwickelverhalten der Konstantkraftfeder 26 und damit dasjenige der Rollobahn 18. Der Scheitelpunkt der gleichsinnig mit der Wicklung des Wickelkörpers 22 ausgerichteten Krümmung ist bezüglich der heckseitigen Stirnseite in Richtung des geraden Führungsschienenabschnitts 30 eingerückt. Dadurch ist es möglich, die Achse 34 des Wickelkörpers 22 ohne weitere Hilfsmittel, wie einem Wickelkern oder dergleichen in Höhe des Aufsatzes 32 und damit in Höhe der Führungsschiene 24A zu halten. Die S-förmige Krümmung der Führungsbahn 36 im Bereich des Aufsatzes 32 ermöglicht auch eine optimierte Nutzung des im Bereich des Fahrzeugdachs 12 zur Verfügung stehenden Bauraums. Die Bauraumeinsparung kann sich wiederum zugunsten der Höhe des unterhalb der Rolloanordnung 16 angeordneten Fahrzeuginnenraums auswirken.

Die äußere Schale 44 des Aufsatzes 32 fluchtet im Bereich ihrer vorderen Stirnseite mit einem oberen Steg 48 des geraden Führungsschienenabschnitts 30 und die innere Schale 46 fluchtet mit ihrer Oberseite mit der Oberseite eines unteren Stegs 50 des geraden Führungsschienenabschnitts 30. Der obere Steg 48 und die äußere Schale 44 einerseits und der untere Steg und die innere Schale 46 andererseits begrenzen die Führungsbahn 36. Die Rollobahn 18 ist derartig U-förmig um den oberen Steg 48 und die äußere Schale 44 geschlagen, dass die Konstantkraftfeder 26 planparallel zu den oberen und unteren Begrenzungsflächen der Führungsbahn 36 in dieser geführt ist.

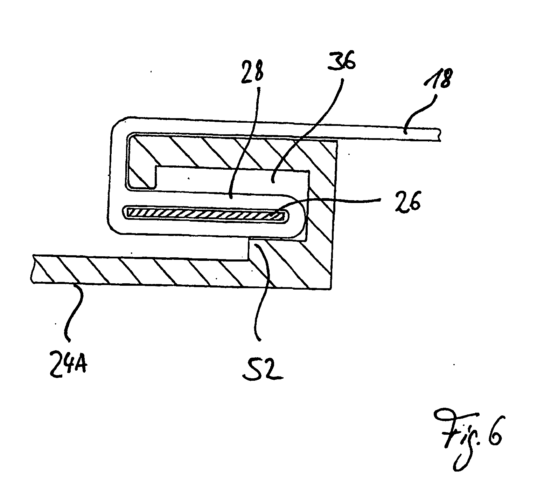

Wie Fig. 6 zu entnehmen ist, liegt die Tasche 28 bzw. die Konstantkraftfeder 26 im Bereich des Führungsschienenabschnitts 30 mit ihrer Unterseite auf einer Stufe 52 der Führungsschiene 24A auf. Im Bereich des Aufsatzes 32 liegt die Tasche 28 im Wesentlichen an der oberen und der unteren Begrenzungsfläche an, welche durch die äußere Schale 44 bzw. die innere Schale 46 des Aufsatzes 32 gebildet sind.

Die Dicke der äußeren Schale 44 des Aufsatzes 32 nimmt in der dem Führungsschienenabschnitt 30 abgewandten Richtung, d.h. in Richtung Fahrzeugheck ab. Um die Rollobahn trotzdem im Bereich ihres Wickelkörpers 22 in Fahrzeugquerrichtung gespannt zu halten, nimmt die Breite der äußeren Schale 44 zwischen dem sich an den Führungsschienenabschnitt 30 anschließenden Bereich und der heckseitigen Stirnseite zu, so dass der bezogen auf die Fahrzeuglängsmittelebene außen angeordnete Rand der äußeren Schale 44 einen im Wesentlichen S-förmigen Verlauf bezogen auf die Fahrzeugquerrichtung hat. Der außen liegende Rand der inneren Schale 46 verläuft gegebenenfalls parallel zum außen angeordneten Rand der äußeren Schale 44.

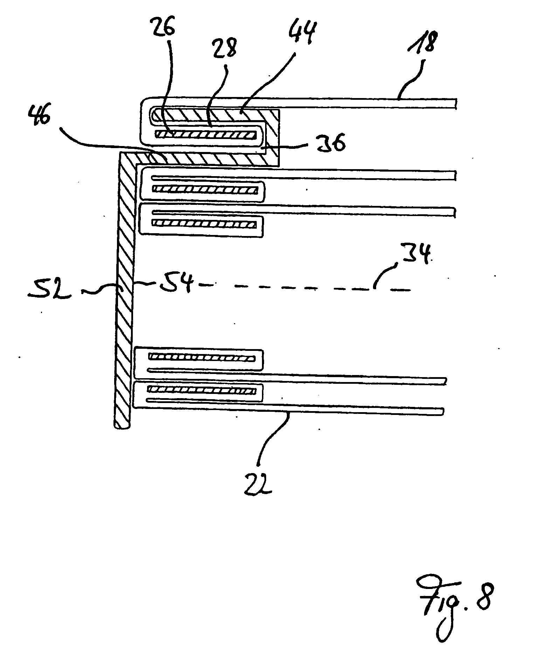

Der Aufsatz 32 weist des Weiteren eine Anlage- bzw. Seitenwand 52 auf, welche, wie Fig. 8 zu entnehmen ist, den Wickelkörper 22 stirnseitig in Fahrzeugquerrichtung begrenzt und eine Führungsfläche 54 für den die Konstantkraftfeder 26 aufweisenden, die Wicklung der Rollobahn 18 bewirkenden Bereich des Wickelkörpers 22 gewährleistet.

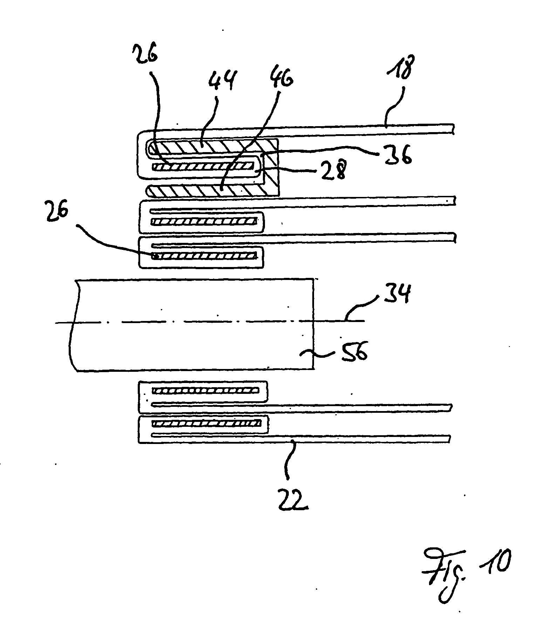

In Fig. 10 ist eine weitere Ausführungsform einer Rolloanordnung der in den Figuren 1 bis 9 dargestellten Art in ihrem Wickelbereich gezeigt. Die Rolloanordnung entspricht im Wesentlichen der vorstehend beschriebenen, unterscheidet sich von dieser aber dadurch, dass im Bereich des heckseitigen Aufsatzes 32 der Führungsschiene 24A zur Aufwicklung der Konstantkraftfeder 26 als Wickelkern ein starr mit dem heckseitigen Aufsatz verbundener Bolzen bzw. Zapfen 56 vorgesehen ist, der in der Wickelachse 34 des Wickelkörpers 22 liegt und ein definiertes Aufwickeln der Rollobahn 18 insbesondere in deren die Konstantkraftfedern 26 aufweisenden Bereichen gewährleistet.

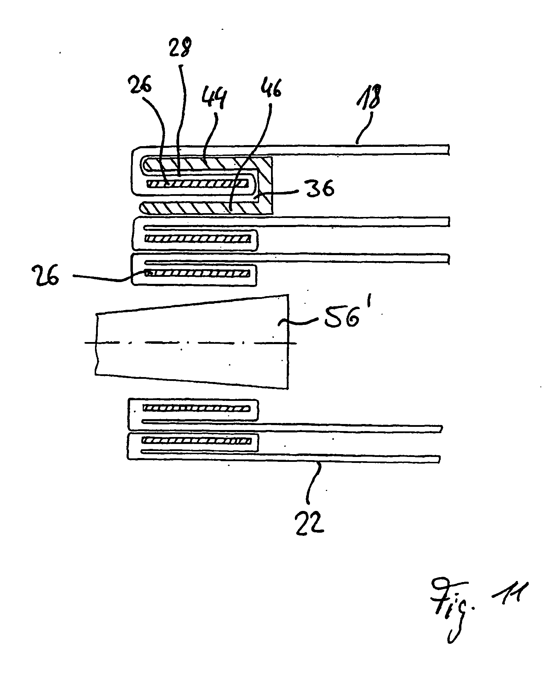

In Fig. 11 ist eine weitere Ausführungsform einer Rolloanordnung der in den Figuren 1 bis 9 beschriebenen Art dargestellt. Diese Rolloanordnung entspricht wiederum im Wesentlichen derjenigen nach Fig. 10, unterscheidet sich aber von dieser dadurch, dass sie keinen zylindrischen Lagerzapfen, sondern einen sich konisch aufweitenden Lagerzapfen 56' für den die Konstantkraftfeder 26 aufweisenden Randbereich des Wickelkörpers 22 aufweist. Diese Form des Lagerzapfens 56' gewährleistet, dass die innen liegenden Wicklungen der Rollobahn 18 in ihren Randbereichen nicht in Richtung der Fahrzeuglängsmittelebene verrutschen.

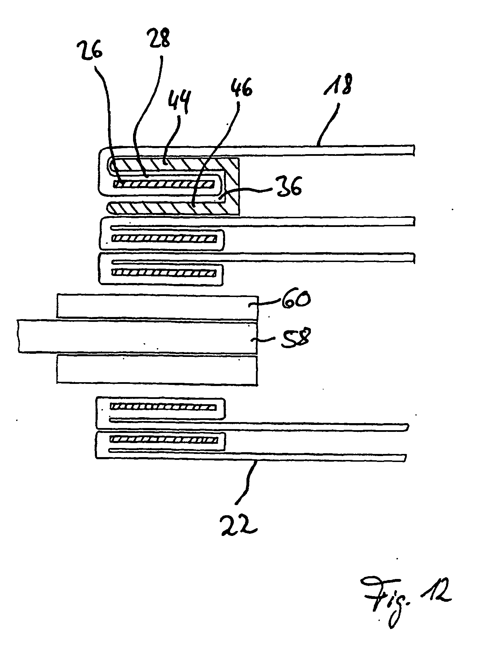

In Fig. 12 ist eine weitere Ausführungsform einer Rolloanordnung der in den Figuren 1 bis 9 beschriebenen Art dargestellt, die wiederum im Wesentlichen derjenigen nach Figur 10 entspricht, sich von dieser aber dadurch unterscheidet, dass sie keinen starr mit dem hinteren Aufsatz 32 verbundenen Lagerzapfen aufweist, sondern eine auf einem mit dem Aufsatz 32 verbundenen Bolzen 58 drehbar gelagerte Hülse 60 aufweist, an der der die Konstantkraftfeder 26 aufweisende Randbereich des Wickelkörpers 22 aufgewickelt wird. Die drehbar gelagerte Hülse 60 gewährleistet eine im Wesentlichen reibungsfreie Aufwicklung dieses Randbereichs.

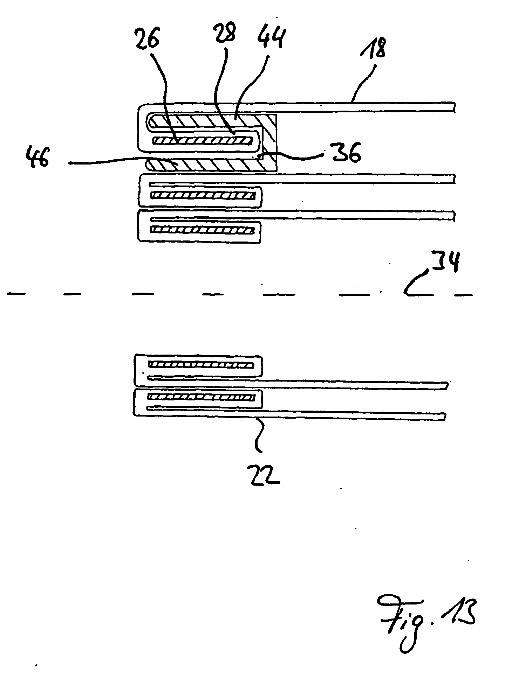

In Fig. 13 ist eine weitere Ausführungsform einer Rolloanordnung der in den Figuren 1 bis 9 dargestellten Art gezeigt. Diese Ausführungsform unterscheidet sich von derjenigen nach den Figuren 1 bis 9 dadurch, dass sie keine seitliche Führungswand für den Wickelkörper 22 aufweist. Vielmehr wird der Wickelkörper 22 beim Aufwickeln der Rollobahn 18 in seinen Stirnseiten anlagefrei gebildet.

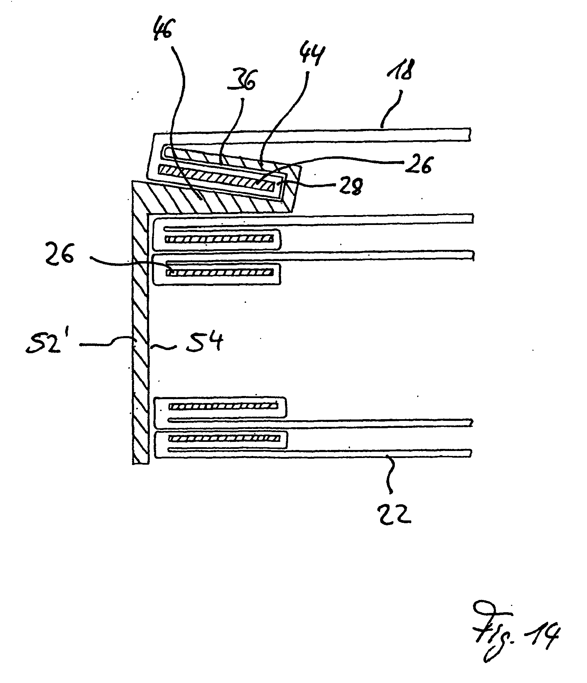

In Fig. 14 ist eine weitere Ausführungsform einer Rolloanordnung dargestellt, die im Wesentlichen derjenigen nach den Figuren 1 bis 9 entspricht. Die in Fig. 14 dargestellte Ausführungsform unterscheidet sich von derjenigen nach den Figuren 1 bis 9 aber dadurch, dass der heckseitige Aufsatz 32 eine Seitenwand 52' aufweist, die gegenüber der Ebene der Führungsbahn 36 nicht einen Winkel von 90° einnimmt, sondern in Richtung der Fahrzeuglängsmittelebene gekippt ist. Die Normale der Anlagefläche 54 ist also nach oben verschwenkt. Dadurch wird erreicht, dass die Wickelachse des Wickelkörpers 22 im Bereich der Konstantkraftfeder 26 nicht in Fahrzeugquerrichtung weist, sondern gegenüber einer horizontalen Ebene angestellt ist, so dass eine Krümmung des Wickelkörpers 22 und damit eine Wölbung der Rollobahn 18 vorgegeben wird. Die Stirnseiten des Wickelkörpers 22 der Rollobahn 18 stützen sich beidseits an symmetrisch ausgebildeten schräg angestellten Seitenwänden 52' ab.

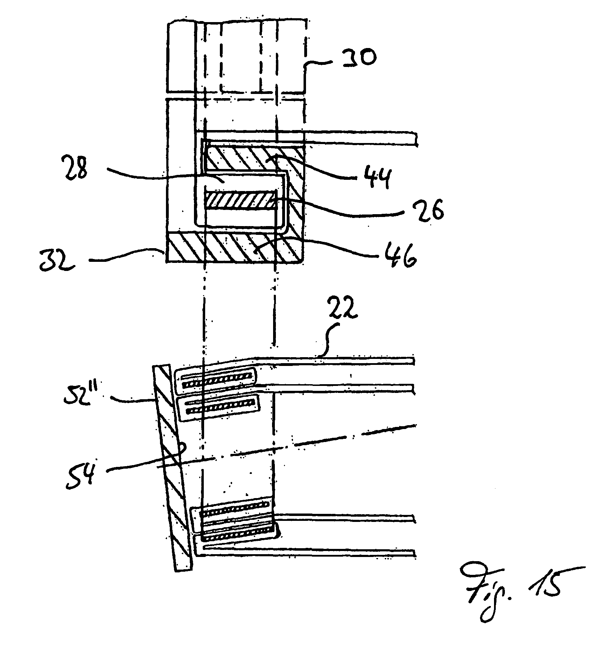

In Fig. 15 ist eine weitere Ausführungsform einer Rolloanordnung der in den Figuren 1 bis 9 dargestellten Art gezeigt. Diese Rolloanordnung entspricht wiederum im Wesentlichen derjenigen nach den Figuren 1 bis 9, unterscheidet sich aber von dieser dadurch, dass sie eine Seitenwand 52" aufweist, die um eine vertikal angeordnete Achse in Richtung Fahrzeuglängsmittelebene verkippt ist, und zwar um einen Winkel von etwa 1° bis 10°. Dadurch wird erreicht, dass die Rollobahn bestrebt ist, eine konisch nach außen verlaufende Wicklung auszuführen. Da die Stirnseite des Wickelkörpers 22 aber an der Seitenwand 52" anliegt, wird die Rollobahn in den mittleren, zwischen den Konstantkraftfedern 26 liegenden Bereichen besser gespannt. Die Achse der Innenfläche der inneren Schale 46 ist parallel zur Flächennormale der von der Seitenwand 52" gebildeten Anlagefläche ausgerichtet.

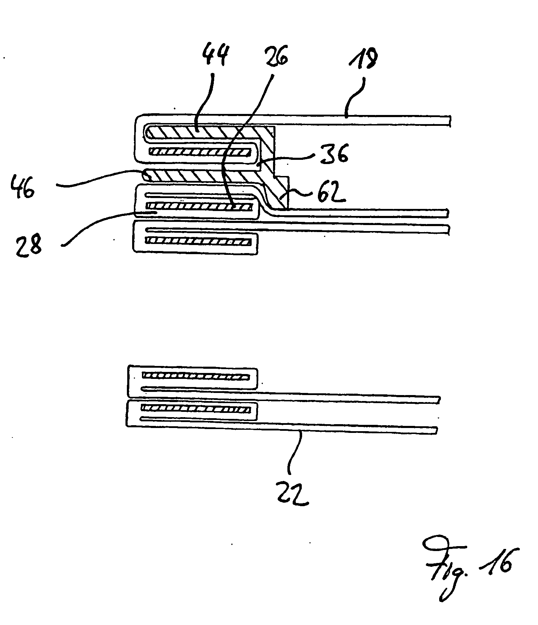

In Fig. 16 ist eine weitere Ausführungsform einer Rolloanordnung dargestellt, die im Wesentlichen derjenigen nach Fig. 13 entspricht, sich von dieser aber dadurch unterscheidet, dass an der inneren Schale 46 des heckseitigen Aufsatzes 32 innenseitig ein Steg bzw. Vorsprung 62 ausgebildet ist, die bezogen auf die Fahrzeuglängsmittelebene an seiner Innenseite eine Stützfläche für den die Konstantkraftfeder 26 aufweisenden Bereich des Wickelkörpers 22 abstützt, so dass die außen liegenden Wicklungen unter der inneren Schale 46 in Richtung Fahrzeugaußenseite gehalten werden, was ein gutes Wickelverhalten gewährleistet.

Die in Fig. 15 dargestellte Ausführungsform einer Rolloanordnung nach der Erfindung entspricht im Wesentlichen derjenigen nach Fig. 16, unterscheidet sich von dieser aber dadurch, dass die Stützfläche nicht von einem Vorsprung gebildet ist, sondern von einer inneren Schale 46 mit einer unten liegenden schräg in Richtung Fahrzeuglängsmittelebene abfallenden Begrenzungsfläche 64. Diese Anordnung bewirkt, dass die Rollobahn innerhalb des Wickelkörpers 22 auch im Bereich der innen liegenden Wicklungen gespannt gehalten ist, was zu einem optimierten Wickelverhalten führt.

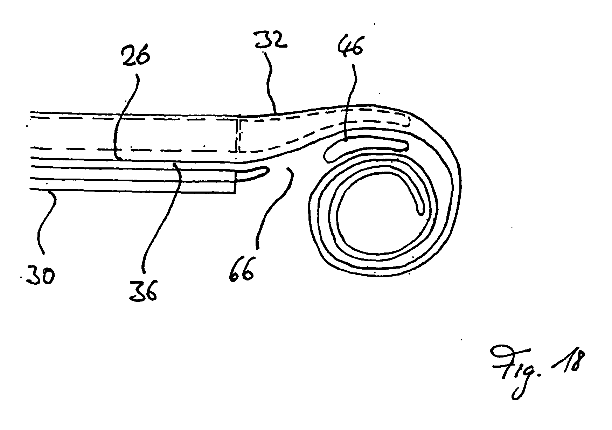

In Fig. 18 ist eine weitere Ausführungsform einer Rolloanordnung nach der Erfindung dargestellt, die wiederum im Wesentlichen derjenigen nach den Figuren 1 bis 9 entspricht, sich von dieser aber dadurch unterscheidet, dass die innere Schale 46 des heckseitigen Aufsatzes 32 der Führungsschiene 24A eine sich in Führungsschienenlängsrichtung erstreckende Aussparung 66 aufweist, die bei der Herstellung des in der Regel spritzgegossenen, aus Kunststoff bestehenden Aufsatzes 32 eine gute Entformung aus dem Spritzgießwerkzeug ermöglicht. Denkbar ist es natürlich auch, dass aus diesen Gründen die obere Schale 44 eine entsprechende Aussparung hat.

Der gerade Führungsschienenabsatz 30 ist in der Regel aus einem Aluminiumstrangpressprofil gebildet.

Bei alternativen, nicht näher dargestellten Ausführungsformen kann der Wickelkörper, d. h. die Wickelachse des Wickelkörpers auch oberhalb des heckseitigen Aufsatzes der Führungsschiene angeordnet sein. Auch kann die Führungsbahn 36 im Bereich des heckseitigen Aufsatzes nur eine einfache Krümmung, die gleichsinnig zu der Wicklung des Wickelköpers ausgerichtet ist, versehen sein. Je nach Ausführungsform können bzw. kann die untere Schale und/oder die obere Schale zur Gewinnung von Bauraum ausgespart sein.

Denkbar ist es auch, dass die Führungsschienen der Rolloanordnung nach der Erfindung einstückig hergestellt sind und mit einem korrespondierend mit dem vorstehend beschriebenen heckseitigen Aufsatz ausgebildeten heckseitigen Endbereich aufweisen.

### Bezugszeichen

- 10: Kraftfahrzeug
- 12: Fahrzeugdach
- 14: Dachausschnitt
- 16: Rolloanordnung
- 18: Rollobahn
- 20: Zugspriegel
- 22: Wickelkörper
- 24A,B: Führungsschiene
- 26: Randversteifung
- 28: Randtasche
- 30: Führungsschienenabschnitt
- 32: Aufsatz
- 34: Wickelachse
- 36: Führungsbahn
- 38: Positionierzapfen
- 40: Fixierlasche
- 42: Langloch
- 44: äußere Schale
- 46: innere Schale
- 48: Steg
- 50: Steg
- 52: Seitenwand
- 54: Führungsfläche
- 56: Lagerzapfen
- 58: Bolzen
- 60: Hülse
- 62: Vorsprung
- 64: Begrenzungsfläche
- 66: Aussparung
- 68: Führungskanal

## Patentansprüche

1. Rolloanordnung für ein Kraftfahrzeug, insbesondere für ein Fahrzeugdach, mit mindestens einer Rollobahn (18), die entlang ihrer seitlichen Randbereiche jeweils ein als Kraftfeder ausgebildetes Führungsband (26) umfasst, das sich entlang der Ausziehrichtung der Rollobahn (18) erstreckt, das in einer sich in Ausziehrichtung erstreckenden, die Rollobahn quer zur Ausziehrichtung spannenden Führungsbahn (36) einer Führungsschiene (24A, 24B) geführt ist, und das die Rollobahn (18) nach Austreten aus der Führungsbahn (36) zu einem Wickelkörper (22) formt, **dadurch gekennzeichnet, dass** der Wickelkörper (22) eine sich quer zur Ausziehrichtung der Rollobahn (18) erstreckende Wickelachse (34) hat, die bezogen auf die Längserstreckung der beidseits angeordneten Führungsbahnen (36) so angeordnet ist, dass sie diese bei einer Projektion in Fahrzeughochrichtung schneidet, wobei die Führungsbahnen (36) jeweils eine in Ausziehrichtung in Wickelsinn gekrümmte Führungsfläche für den Rollobahnabschnitt aufweisen, der sich an den Wickelkörper (22) anschließt, wobei die Krümmung der Führungsfläche gleichsinnig zu der Wicklung des Wickelkörpers (22) ist.

2. Rolloanordnung nach Anspruch 1, **dadurch gekennzeichnet, dass** die Führungsbahnen (36) jeweils in Höhe der Wickelachsen an einem stirnseitigen Aufsatz (32) der Führungsschiene (24A, 24B) ausgebildet sind, der an einer Stirnseite eines im Wesentlichen geraden Führungsschienenabschnittes (30) angeordnet ist.

3. Rolloanordnung nach Anspruch 2, **dadurch gekennzeichnet, dass** der Aufsatz (32) zumindest in Höhe der Wickelachse (34) eine bezogen auf die Wickelachse (34) innere Schale (46) und eine bezogen auf die Wickelachse (34) äußere Schale (44) aufweist, welche Schalen (44, 46) die Führungsbahn in Höhe der Wickelachse (34) begrenzen und mit Stegen (48, 50) korrespondieren, die die Führungsbahn (36) im Bereich des im Wesentlichen geraden Führungsschienenabschnitts (30) begrenzen.

4. Rolloanordnung nach Anspruch 2 oder 3, **dadurch gekennzeichnet, dass** der Aufsatz (32) eine seitliche Anlagefläche (54) für den korrespondierenden Randbereich des Wickelkörpers (22) hat.

5. Rolloanordnung nach Anspruch 4, **dadurch gekennzeichnet, dass** die Anlagefläche (54) eine Normale hat, die gegenüber der Fahrzeugquerrichtung in Richtung Fahrzeugbug um vorzugsweise 1° bis 10° und/oder in vertikaler Richtung angestellt ist, so dass eine Wölbung des Wickelkörpers (22) vorgegeben wird.

6. Rolloanordnung nach Anspruch 3, **dadurch gekennzeichnet, dass** die innere Schale (46) in einem der Fahrzeuglängsmittelebene zugewandten Bereich eine Stützfläche für den die Konstantkraftfeder aufweisenden Bereich des Wickelkörpers (22) hat.

7. Rolloanordnung nach Anspruch 6, **dadurch gekennzeichnet, dass** die Stützfläche aus einer Schräge (64) gebildet ist, die an der inneren Schale (46) ausgebildet ist.

8. Rolloanordnung nach Anspruch 6, **dadurch gekennzeichnet, dass** die Stützfläche an einem an der inneren Schale ausgebildeten Vorsprung (62) gebildet ist.

9. Rolloanordnung nach einem der Ansprüche 1 bis 8, **dadurch gekennzeichnet, dass** im Bereich der Wickelachse (34) ein Wickelelement für den Wickelkörper (22) vorgesehen ist.

10. Rolloanordnung nach Anspruch 9, **dadurch gekennzeichnet, dass** das Wickelelement ein Bolzen (58) ist.

11. Rolloanordnung nach Anspruch 10, **dadurch gekennzeichnet, dass** der Bolzen (58) eine Stirnelement zur Führung der Kraftfeder hat.

12. Rolloanordnung nach Anspruch 10 oder 11, **dadurch gekennzeichnet, dass** der Bolzen (58) kegelstumpfartig aufgebildet ist.

13. Rolloanordnung nach einem der Ansprüche 9 bis 12, **dadurch gekennzeichnet, dass** das Wickelelement im Bereich der Kraftfeder (26) ein drehbar gelagertes Element umfasst.

14. Rolloanordnung nach Anspruch 13, **dadurch gekennzeichnet, dass** das drehbar gelagerte Element eine auf einem Bolzen gelagerte Hülse (60) ist.

15. Rolloanordnung nach Anspruch 2, **dadurch gekennzeichnet, dass** der Aufsatz (32) Positionierzapfen (38) aufweist, über die er mit dem im Wesentlichen gerade ausgebildeten Führungsschienenabschnitt (30) verbunden ist.

16. Rolloanordnung nach Anspruch 3, **dadurch gekennzeichnet, dass** der Aufsatz (32) mindestens eine Fixierlasche (40) aufweist, mittels derer er an einem Fahrzeugaufbau fixierbar ist.

17. Rolloanordnung nach Anspruch 3, **dadurch gekennzeichnet, dass** der Aufsatz (32) einen Führungskanal (66) für ein Antriebskabel eines Dachöffnungssystems aufweist, welcher mit einem Führungskanal an dem im Wesentlichen gerade ausgebildeten Führungsschienenabschnitt fluchtet.

18. Rolloanordnung nach einem der Ansprüche 1 bis 17, **dadurch gekennzeichnet, dass** über die Quererstreckung des Wickelkörpers (22) verteilt beabstandet von den Konstantkraftfedern (26) zumindest eine Wickelhilfe angeordnet ist, die ausschließlich mit der Rollobahn (16) zusammenwirkt.

19. Rolloanordnung nach Anspruch 18, **dadurch gekennzeichnet, dass** die Wickelhilfe derart geformt ist, dass zumindest in einem Teilbereich des Wickelkörpers dieser im Querschnitt oval abgeflacht aufwickelbar ist.

20. Rolloanordnung nach Anspruch 18 oder 19, **dadurch gekennzeichnet, dass** die Wickelhilfe über die Erstreckung des Wickelkörpers (22) dreidimensional konturiert, insbesondere bogenförmig oder gewölbt angeordnet sind, so dass die Rollobahn (18) zu einem wickelkernfreien bogenförmigen Wickelkörper (22) aufwickelbar ist.

## Claims

1. Roller blind arrangement for a motor vehicle, in particular for a vehicle roof, with at least one roller blind web (18) which comprises, along each of the lateral edge regions thereof, a guide belt (26) which is designed as a power spring, extends along the extension direction of the roller blind web (18), is guided in a guide track (36) of a guide rail (24A, 24B), the guide track extending in the extension direction and tensioning the roller blind web transversely with respect to the extension direction, and which shapes the roller blind web (18), after the latter emerges from the guide track (36), to form a winding body (22), **characterized in that** the winding body (22) has a winding axis (34) which extends transversely with respect to the extension direction of the roller blind web (18) and is arranged with respect to the longitudinal extent of the guide tracks (36) arranged on both sides in such a manner that said winding axis intersects said guide tracks in a projection in the vertical direction of the vehicle, the guide tracks (36) each having a guide surface, which is curved in the winding direction in the extension direction, for the roller blind web section which adjoins the winding body (22), the curvature of the guide surface being in the same direction as the winding of the winding body (22).

2. Roller blind arrangement according to Claim 1, **characterized in that** the guide tracks (36) are each formed level with the winding axes on an end-side attachment (32) of the guide rail (24A, 24B), which attachment is arranged on the end side of a substantially rectilinear guide rail section (30).

3. Roller blind arrangement according to Claim 2, **characterized in that** the attachment (32) has, at least level with the winding axis (34), an inner shell (46) with respect to the winding axis (34) and an outer shell (44) with respect to the winding axis (34), which shells (44, 46) bound the guide track level with the winding axis (34) and correspond to webs (48, 50) which bound the guide track (36) in the region of the substantially rectilinear guide rail section (30).

4. Roller blind arrangement according to Claim 2 or 3, **characterized in that** the attachment (32) has a lateral bearing surface (54) for the corresponding edge region of the winding body (22).

5. Roller blind arrangement according to Claim 4, **characterized in that** the bearing surface (54) has a normal which is positioned in relation to the transverse direction of the vehicle by preferably 1° to 10° and/or in the vertical direction towards the front of the vehicle such that an arching of the winding body (22) is predetermined.

6. Roller blind arrangement according to Claim 3, **characterized in that** the inner shell (46) has, in a region facing the longitudinal centre plane of the vehicle, a supporting surface for that region of the winding body (22) which has the constant power spring.

7. Roller blind arrangement according to Claim 6, **characterized in that** the supporting surface is formed from an oblique (64) which is formed on the inner shell (46).

8. Roller blind arrangement according to Claim 6, **characterized in that** the supporting surface is formed on a projection (62) which is formed on the inner shell.

9. Roller blind arrangement according to one of Claims 1 to 8, **characterized in that** a winding element for the winding body (22) is provided in the region of the winding axis (34).

10. Roller blind arrangement according to Claim 9, **characterized in that** the winding element is a bolt (58).

11. Roller blind arrangement according to Claim 10, **characterized in that** the bolt (58) has an end element for guiding the power spring.

12. Roller blind arrangement according to Claim 10 or 11, **characterized in that** the bolt (58) is designed in the manner of a truncated cone.

13. Roller blind arrangement according to one of Claims 9 to 12, **characterized in that** the winding element comprises a rotatably mounted element in the region of the power spring (26).

14. Roller blind arrangement according to Claim 13, **characterized in that** the rotatably mounted element is a sleeve (60) which is mounted on a bolt.

15. Roller blind arrangement according to Claim 2, **characterized in that** the attachment (32) has positioning pins (38) via which said attachment is connected to the guide rail section (30) of substantially rectilinear design.

16. Roller blind arrangement according to Claim 3, **characterized in that** the attachment (32) has at least one fixing tab (40) by means of which said attachment can be fixed to a vehicle body.

17. Roller blind arrangement according to Claim 3, **characterized in that** the attachment (32) has a guide channel (66) for a driving cable of a roof-opening system, which guide channel is aligned with a guide channel on the guide section of substantially rectilinear design.

18. Roller blind arrangement according to one of Claims 1 to 17, **characterized in that** at least one winding aid which interacts exclusively with the roller blind web (16) is arranged distributed at a distance from the constant power springs (26) over the transverse extent of the winding body (22).

19. Roller blind arrangement according to Claim 18, **characterized in that** the winding aid is shaped in such a manner that said winding body can be wound up in a manner flattened ovally in cross section, at least in a partial region thereof.

20. Roller blind arrangement according to Claim 18 or 19, **characterized in that** the winding aid is contoured three-dimensionally over the extent of the winding body (22), and in particular is arranged in a curved or arched manner, and therefore the roller blind web (18) can be wound up to form a curved winding body (22) without a winding core.

## Revendications

1. Agencement de store pour un véhicule automobile, notamment pour un toit de véhicule, comprenant au moins une toile de store (18) qui comprend le long de ses régions de bord latérales à chaque fois une bande de guidage (26) réalisée sous forme de ressort de force, la bande de guidage s'étendant le long de la direction d'extension de la toile de store (18), étant guidée dans une voie de guidage (36) d'un rail de guidage (24A, 24B) s'étendant dans la direction d'extension, couvrant la toile de store transversalement à la direction d'extension, et formant la toile de store (18) après sa sortie de la voie de guidage (36) en un corps enroulé (22), **caractérisé en ce que** le corps enroulé (22) a un axe d'enroulement (34) s'étendant transversalement à la direction d'extension de la toile de store (18), lequel est disposé par rapport à l'étendue longitudinale des voies de guidage (36) disposées de chaque côté de telle sorte qu'il coupe celles-ci en projection dans une direction verticale du véhicule, les voies de guidage (36) présentant à chaque fois une surface de guidage courbée dans le sens de l'enroulement dans la direction d'extension pour la portion de la toile de store qui se raccorde au corps enroulé (22), la courbure de la surface de guidage étant dans le même sens que l'enroulement du corps enroulé (22).

2. Agencement de store selon la revendication 1, **caractérisé en ce que** les voies de guidage (36) sont à chaque fois réalisées à la hauteur des axes d'enroulement sur un bout frontal (32) du rail de guidage (24A, 24B), qui est disposé sur un côté frontal d'une portion du rail de guidage (30) sensiblement droite.

3. Agencement de store selon la revendication 2, **caractérisé en ce que** le bout (32) présente, au moins à la hauteur de l'axe d'enroulement (34), une coque (46) interne par rapport à l'axe d'enroulement (34) et une coque (44) externe par rapport à l'axe d'enroulement (34), lesquelles coques (44, 46) limitent la voie de guidage à la hauteur de l'axe d'enroulement (34) et correspondent avec des branches (48, 50) qui limitent la voie de guidage (36) dans la région de la portion du rail de guidage (30) sensiblement droite.

4. Agencement de store selon la revendication 2 ou 3, **caractérisé en ce que** le bout (32) a une surface d'appui latérale (54) pour la région de bord correspondante du corps enroulé (22).

5. Agencement de store selon la revendication 4, **caractérisé en ce que** la surface d'appui (54) a une normale qui est inclinée par rapport à la direction transversale du véhicule dans la direction de l'avant du véhicule de préférence de 1° à 10° et/ou dans la direction verticale, de sorte qu'une courbure du corps enroulé (22) soit prédéfinie.

6. Agencement de store selon la revendication 3, **caractérisé en ce que** la coque interne (46) présente, dans une région tournée vers le plan médian longitudinal du véhicule, une surface d'appui pour la région du corps enroulé (22) présentant le ressort de force constante.

7. Agencement de store selon la revendication 6, **caractérisé en ce que** la surface d'appui est formée par un biseau (64), qui est réalisé sur la coque interne (46).

8. Agencement de store selon la revendication 6, **caractérisé en ce que** la surface d'appui est formée sur une saillie (62) réalisée sur la coque interne.

9. Agencement de store selon l'une quelconque des revendications 1 à 8, **caractérisé en ce qu'**un élément d'enroulement est prévu pour le corps enroulé (22) dans la région de l'axe d'enroulement (34).

10. Agencement de store selon la revendication 9, **caractérisé en ce que** l'élément d'enroulement est un goujon (58).

11. Agencement de store selon la revendication 10, **caractérisé en ce que** le goujon (58) a un élément frontal pour le guidage du ressort de force.

12. Agencement de store selon la revendication 10 ou 11, **caractérisé en ce que** le goujon (58) est réalisé sous forme tronconique.

13. Agencement de store selon l'une quelconque des revendications 9 à 12, **caractérisé en ce que** l'élément d'enroulement comprend, dans la région du ressort de force (26), un élément monté à rotation.

14. Agencement de store selon la revendication 13, **caractérisé en ce que** l'élément monté à rotation est une douille (60) montée sur un goujon.

15. Agencement de store selon la revendication 2, **caractérisé en ce que** le bout (32) présente un tourillon de positionnement (38), par le biais duquel il est connecté à la portion du rail de guidage (30) sensiblement droite.

16. Agencement de store selon la revendication 3, **caractérisé en ce que** le bout (32) présente au moins une patte de fixation (40), au moyen de laquelle il peut être fixé à une carrosserie du véhicule.

17. Agencement de store selon la revendication 3, **caractérisé en ce que** le bout (32) présente un canal de guidage (66) pour un câble d'entraînement d'un système d'ouverture de toit, qui est aligné avec un canal de guidage sur la portion du rail de guidage sensiblement droite.

18. Agencement de store selon l'une quelconque des revendications 1 à 17, **caractérisé en ce qu'**au moins un auxiliaire d'enroulement est disposé à distance des ressorts de force constante (26) de manière répartie sur l'étendue transversale du corps enroulé (22), lequel auxiliaire d'enroulement coopère exclusivement avec la toile de store (18).

19. Agencement de store selon la revendication 18, **caractérisé en ce que** l'auxiliaire d'enroulement est formé de telle sorte qu'au moins dans une région partielle du corps enroulé, celui-ci puisse être enroulé sous forme ovale aplatie en section transversale.

20. Agencement de store selon la revendication 18 ou 19, **caractérisé en ce que** l'auxiliaire d'enroulement a un contour tridimensionnel sur l'étendue du corps enroulé (22), notamment est disposé sous forme courbée ou cintrée, de sorte que la toile de store (18) puisse être enroulée pour former un corps enroulé (22) de forme courbe sans mandrin d'enroulement.
